# EUROPEAN PATENT APPLICATION

(11) **EP 1 865 704 A2**
(43) Date of publication of application: **12.12.2007**
(21) Application number: 07251974.7
(22) Date of filing: 14.05.2007
(51) Int. Cl.: H04N 1/387

(54) **Image forming apparatus for forming image on a pre-processed sheet**

(30) Priority: 05.06.2006 JP 2006155795
(71) Applicant: Konica Minolta Business Corporation, Inc., Chiyoda-ku Tokyo, Tokyo 100-0005 (JP)
(72) Inventor: Yoshimura, Kazutoshi c/o Konica Minolta Business Technologies, Inc., Hashioji-shi, Tokyo, 192-8505 (JP); Sakata, Satoshi c/o Konica Minolta Business Technologies, Inc., Hashioji-shi, Tokyo, 192-8505 (JP); Yamamoto, Kenji c/o Konica Minolta Business Technologies, Inc., Hashioji-shi, Tokyo, 192-8505 (JP); Yamauchi, Kazumichi c/o Konica Minolta Business Technologies, Inc., Hashioji-shi, Tokyo, 192-8505 (JP); Okamoto, Akira c/o Konica Minolta Business Technologies, Inc., Hashioji-shi, Tokyo, 192-8505 (JP)
(74) Representative: Alton, Andrew

(57) **Abstract**

An image forming apparatus includes: a recording section which records therein image data, and processing position information of a sheet; an image forming section which forms an image on the sheet on the basis of the image data recorded in the recording section; a position detector which detects a pre-processed position on a sheet to be fed; and a controller which compares the processing position information with a value detected by the position detector, judges whether or not an abnormality is present, and corrects an image forming position of the image forming section for each block of a plurality of blocks surrounded by either processed portions of a sheet or a processed portion and an edge of the sheet.

## Description

This application is based on Japanese Patent Application No. 2006-155795 filed on June 5, 2006, which is incorporated hereinto by reference.

### BACKGROUND OF THE INVENTION

The present invention relates to an image forming apparatus, such as a copying machine, a facsimile, and a printer, and in particular, to an image forming apparatus which forms an image on a perforated sheet.

In recent years, image forming apparatuses incorporating an electro-photographic method are used in the field of short-run printing, such as a POD (Print On Demand), whereby the image forming apparatus is required to meet the various needs relating to image quality and recording members. Specifically concerning the recording members, a previously perforated or a previously folded sheet is used, hereinafter, such recording sheet is referred to as a "pre-processed sheet".

When such pre-processed sheet is used, and when image formation is conducted based on a leading edge of the pre-processed sheet, and when a processed position varies against the leading edge, image formation may be adversely conducted on the processed position. If image formation is conducted on such processed position, in the case of perforated sheets, the image cannot be recognized after separation, and in the case of folded sheet, toner is not completely fixed on the folded section in a post-finishing process after image formation.

In order to overcome these problems, Unexamined Japanese Patent Application Publication No. 02-175,171 discloses a method in which when image formation is conducted on continuous perforated sheets, the perforation is detected by a detecting circuit using ultrasonic waves, whereby image formation is so controlled as not to be conducted on the perforation. Further, Unexamined Japanese Patent Application Publication No. 05-229,193 discloses a method in which the sheet is registered after the perforation is detected by laser beams.

Further, another technology is proposed to register the sheet and the image, in Unexamined Japanese Patent Application Publication No. 07-131,599, a format sheet is used which carries a previously printed filling frame, a reading section reads the position of the filling frame, and signals detected by the reading section are compared with previously set frame information, whereby the image position is correctly positioned.

However, Unexamined Japanese Patent Application Publication Nos. 02-175,171, and 05-229,193 disclose the perforation detection and registration method on the series of perforated sheets whose perforation is perpendicular to the conveyance direction of the perforated sheets, however, both of which do not disclose the application of the series of perforated sheets whose perforation is parallel to the conveyance direction of the perforated sheets. Further, in Unexamined Japanese Patent Application Publication No. 07-131,599, the formatted sheet is limited in use of the previously printed filling frame.

Additionally, in Unexamined Japanese Patent Application Publication No. 07-131,599, the intended objects to be corrected are a starting position and timing, for main scanning and sub-scanning, that is, the position of the total image is corrected on the sheet, but no printing position is corrected by using plural frame references.

### SUMMARY OF THE INVENTION

One aspect of the present invention is an image forming apparatus, including: a recording section which records therein image data, and processing position information of a sheet; an image forming section which forms an image on the sheet on the basis of the image data recorded in the recording section; a position detector which detects a pre-processed position on the sheet; and a controller which compares the processing position information with a value detected by the position detector, judges whether or not an abnormality is present, and corrects an image forming position of the image forming section for each block of a plurality of blocks surrounded by either processed portions of a sheet or a processed portion and an edge of the sheet.

### BRIEF DESCRIPTION OF THE DRAWINGS

Fig. 1 shows relevant parts of an image forming apparatus relating to an embodiment of the present invention.
Fig. 2 is a block diagram which shows a control sequence of an image forming apparatus relating to an embodiment of the present invention.
Figs. 3(a) and 3(b) show the relationship between processing position detector 20 and sheet S.
Fig. 4 is a flow chart which shows the sequence of the image forming apparatus relating to an embodiment of the present invention.
Fig. 5 shows an inputted example of processing position information.
Figs. 6(a) and 6(b) show an example of image allotment and layout on the sheet in Fig. 5.
Fig. 7 shows an example of a display screen of an inputting section relating to an embodiment of the present invention.
Fig. 8 shows an example of correction reference positions and image position corrections.
Fig. 9 is a flow chart which shows the sequential operation of a processing position information detecting mode relating to an embodiment of the present invention.
Fig. 10 is a flow chart which shows the sequential operation when abnormalities occur on an embodiment of the present invention.

### DETAILED DESCRIPTION OF THE PREFERRED EMBODIMENT

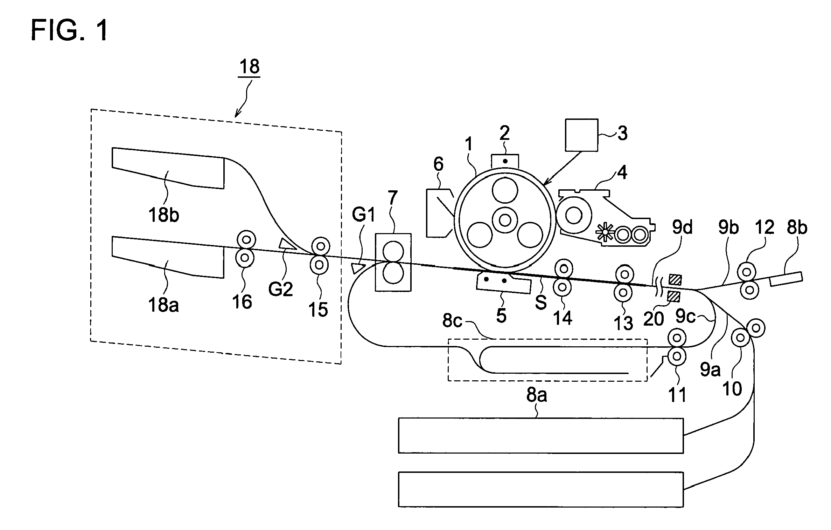

The embodiment of the present invention will now be detailed while referring to the drawings. Fig. 1 shows the relevant parts of the image forming apparatus relating to an embodiment of the present invention.

Numeral 1 represents a drum shaped photoconductor, numeral 2 represents an electrical charger which evenly charges photoconductor 1, numeral 3 represents an imagewise exposure unit which exposes an image onto charged photoconductor 1, numeral 4 represents a developing unit which develops the electrostatic latent image on photoconductor 1, and forms a toner image, numeral 5 represents a transfer and separation unit which transfers the toner image formed on photoconductor 1 onto sheet S and separates sheet S from photoconductor 1, numeral 6 represents a cleaning unit which removes remaining toner from photoconductor 1, and numeral 7 represents a fixing unit which permanently fixes the toner image onto sheet S. Numeral 18 represents a finisher which has plural ejection trays 18a and 18b.

While photoconductor 1 rotates clockwise, charging, exposure, and development are conducted on photoconductor 1 whereby a toner image is formed on photoconductor 1, after which the toner image is transferred to sheet S conveyed to synchronize for proper image formation, and the transferred toner image is fixed as a permanent image onto sheet S. After the image transfer, photoconductor 1 is cleaned by cleaning unit 6.

Sheet S is conveyed from sheet storing section 8a, represented by a cassette or a tray, and is supplied to paired registration rollers 13 via paired conveyance rollers 10. Sheet S is temporarily stopped by paired registration rollers 13, and is synchronously conveyed with proper image formation, after which sheet S is fed to transfer and separation unit 5. Numeral 14 represents paired conveyance rollers which further convey sheet S from paired registration rollers 13 to a transfer section. Sheet S, carrying the transferred toner image, is fixed by fixing unit 7, and then ejected onto ejection tray 18a outside of the apparatus via conveyance rollers 15 and 16.

In a double-sided image forming mode, after an image is formed on a first surface, sheet S is oriented downward by switching gate G1, and is conveyed to sheet flipping section 8c. Flipped sheet S is conveyed by paired conveyance rollers 11, and interflows to conveyance path 9d, via conveyance path 9c. Sheet S is conveyed again to the transfer section from paired registration rollers 13, whereby image formation is conducted on a second surface, and the toner image on the second surface is also fixed by fixing unit 7. Sheet S, carrying the fixed images on both surfaces, is ejected onto ejection tray 18a via conveyance rollers 15 and 16. In this case, switching gates G1 and G2 are driven by solenoids which are not illustrated, and send sheet S to the desired path.

Numeral 20 represents a position detector which detects processing position information on sheet S. The position detector is mounted upstream of paired registration rollers 13 with respect to the sheet conveyance direction, and its length is longer than the width of sheet S.

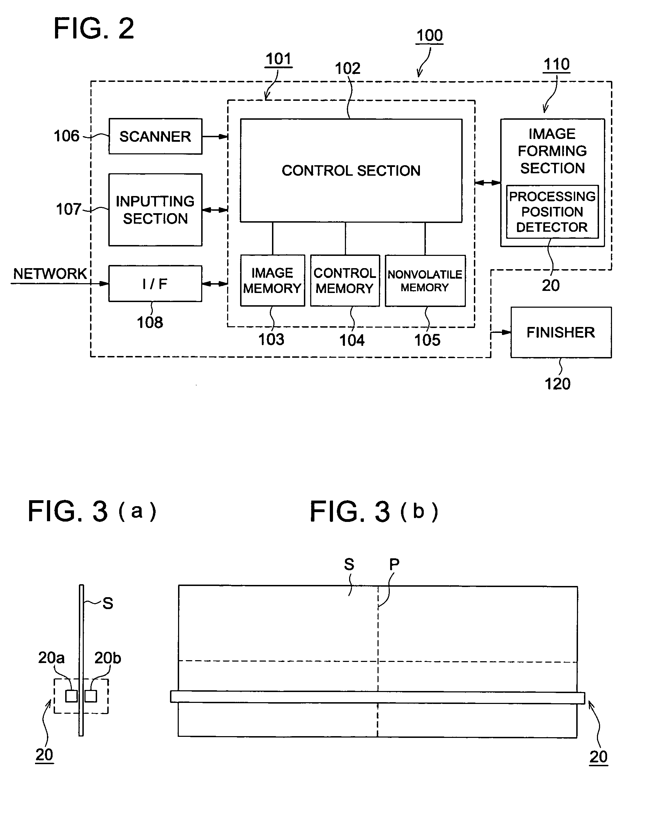

Fig. 2 is a block diagram which shows the control of the image forming apparatus relating to the embodiment of the present invention. In Fig, 2, various sections and their relationships which are necessary to explain the operation of the present embodiment are illustrated, and well known sections as the image forming apparatus are not illustrated.

Numeral 100 represents an image forming apparatus which forms an image on a sheet based on image data. Numeral 120 represents a finisher (which corresponds to finisher 18 in Fig. 1) which selects the sheet ejection tray, or folds the sheet, as the post-finishing operation for the sheet carrying the formed image.

In image forming apparatus 100, numeral 101 represents a controller to conduct various controls such as (i) allotment and layout of image data in a recording section, (ii) judgment of presence of abnormality on processing position, (iii) correction of image forming positions, (iv) enabling an operator to select sheet type using an inputting section and (v) selection of ejection trays, numeral 106 represents a scanner which reads original image to form the image data, numeral 107 represents an inputting section having LEDs to display various information of the apparatus, through which an operator inputs various operational information, numeral 108 represents an interface section of a communication section which communicates to outer sections via a network, and numeral 110 represents an image forming section (which corresponds to the drawing from which finisher 18 is omitted in Fig. 1) which forms the image on the sheet.

In Fig. 2, controller 101 includes control section 102 being a CPU to control various sections, image memory 103 serving as various recording sections, control memory 104, and nonvolatile memory 105.

Various controls are conducted by programs previously memorized in control memory 104. Image memory 103 memorizes image data inputted through scanner 106 or interface section 108, and further memorizes composite image data as a single page carrying said image data to which after-mentioned "allotting processing" has been conducted. Nonvolatile memory 105 memorizes plural information of the sheet, such as sheet size, processing position information, and processing type information.

The operator inputs various operational information through inputting section 107, after the specific image data in image memory 103 is selected based on previously inputted information, image forming unit 110 forms an image based on the selected image data.

Figs. 3(a) and 3(b) show the relationship between position detector 20 and sheet S. Fig. 3(a) is a cross sectional view, while Fig. 3(b) is a plane view. Numeral 20a represents a light emitting section including plural LEDs, and numeral 20b represents a light receiving section in which plural photodiodes are aligned on a line. Since light amount entering light receiving section 20b, through the perforated section of sheet S differs to that through non-perforated section, the position of the perforation can be detected.

LEDs 20a and photodiodes 20b, both of which form position detector 20 are arranged to sandwich sheet S, and are longer than the widest expected sheet to be conveyed by the image forming apparatus, due to this, width, the position and the length of the processing position in the total area of the widest sheet can be detected.

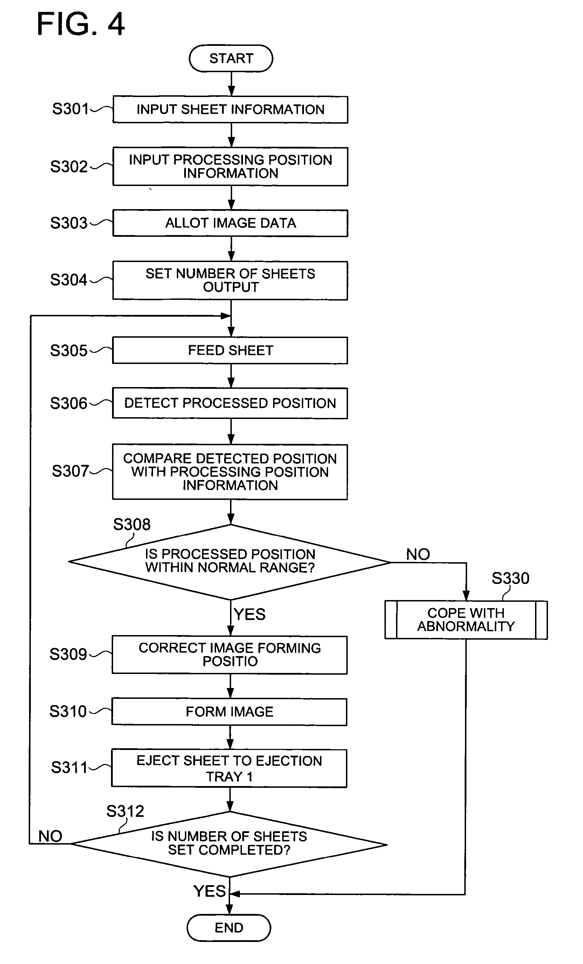

Fig. 4 is a flow chart which shows the operation of the image forming apparatus relating to the embodiment of the present invention. In step S301, sheet information, such as the type of sheet and the size of sheet, are inputted via inputting section 107. Sheet information is inputted to correspond to each sheet storing section 8a (hereinafter referred to as a sheet feeding tray). For example, when image formation is to be conducted on a perforated sheet, the perforated sheet and the sheet feeding tray are selected on a sheet type selecting screen. In addition, when the sheets are set in the sheet feeding tray, the size of sheet is automatically detected by sheet size detecting sensor (which is not illustrated) mounted on each sheet feeding tray. The type of sheet means not only a type of sheet, such as a perforated sheet, a folded sheet, a normal sheet, a high quality sheet and a coated sheet, but also means concepts including weight of the sheet.

When "perforated sheet" is selected by the operator on the sheet type selection screen, an image screen for inputting processing position information of the perforation is displayed on the operation screen, the operator inputs necessary processing position information (step S302), and the inputted information is recorded in nonvolatile memory 105 which serves as a recording section. Processing position information includes the number of blocks, the processing position of perforation (by X-Y coordinates), and processing types (which are the diameter and the interval between individual perforations).

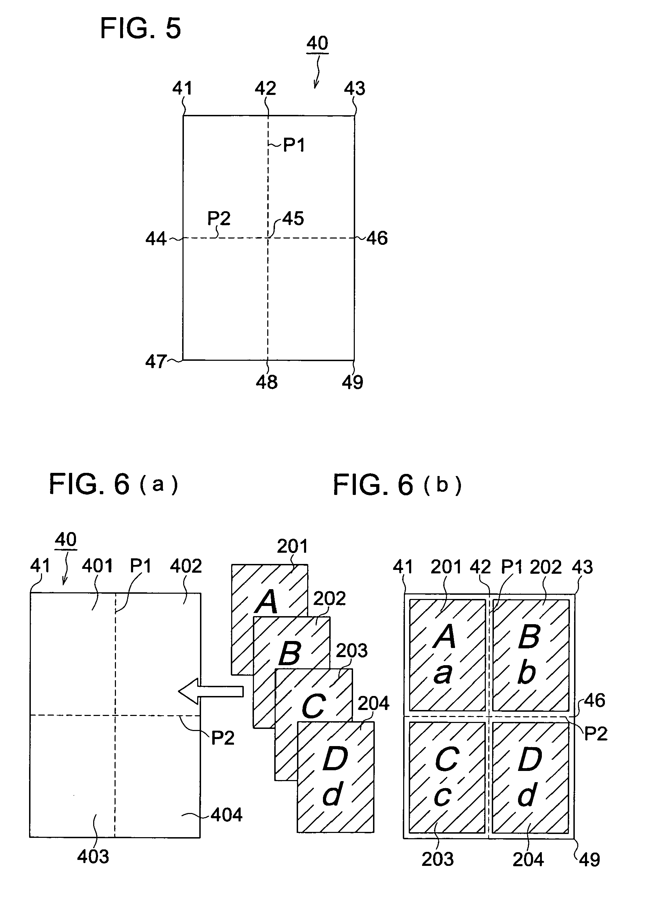

"Block" means the area surrounded by the perforations on the sheet, or the area surrounded by the perforations and the edges of sheet. The number of blocks means the number of such areas. Next, an inputting method of the processing position relative to the perforations will now be detailed while referring to Fig. 5.

Fig. 5 shows an inputted example of processing position information. Firstly, overall sheet size information is obtained. When the sheets are set into the sheet feeding tray, the sheet size is automatically noted by a size detecting sensor mounted on the sheet feeding tray. Otherwise, when a sheet type and a sheet size, being of finite form, are selected via the inputting section, the sheet size information can be designated. Alternatively, the sheet type and the sheet size can be numerically inputted via the inputting section image screen.

Next, the processing positions of the perforations are inputted. The processing positions are sequentially inputted via X-Y coordinates of intersecting points. The intersecting point is the point where an edge of the sheet and a perforation intersect, or the point where a perforation intersects another perforation.

Further, processing type of perforation is inputted. The processing type means the diameter of perforation, or the interval between perforations, which normally are not necessary to be inputted. However, when the diameter of perforation is extraordinarily large, a printable block size on the sheet is reduced based on the diameter of perforation. Further, when image formation is conducted on the perforation and if no problem occurs due to the wider interval of the perforation, the block size can be increased to the perforation.

The example in Fig. 5 shows sheet 40 as A3 size, representing a finite form, and there are four blocks. P1 and P2 represent the perforations, and numerals 41 - 49 represent the intersecting points. Since intersecting point 41 represents original point (0,0), the sheet size is automatically determined in the case of the finite form sheet, because the coordinate of intersecting point 49 corresponds to information stored in nonvolatile memory 105.

In Fig. 5, in finite formed sheet A3 (297 x 420 mm), intersecting point 49 is represented by coordinate (297, 420). Since the perforations are made parallel to the edges of the sheet, if the operator inputs coordinate (148.5, 210) as intersecting point 45, the positions of perforations are established, and the coordinates of other intersecting points are not inputted. Further, as another inputting method, if the number of the blocks is 4, 6 or 9, and each block is the same shape, when the operator inputs the size of sheet and the number of blocks, the positions of the perforations are automatically determined. However, if the perforations are not parallel to the edges of the sheet, above described method is not usable, that is, the operator must input the coordinates of all intersecting points, to specify the processing positions of the perforations.

Further, in the sheet type selection which was described above, if the operator selects "perforated sheet", the operator can easily retrieve processing position information. That is, previously inputted processing position information, such as the diameter of perforation holes, the interval, and the position, is associated with the name (brand and production number) of the specific perforated sheet, and said associated information is stored in nonvolatile memory 105, serving as a recording section. Therefore, when the operator selects a name of the perforated sheet, processing position information is easily retrieved.

Accordingly, since the present invention has a sheet type selector, described above, by which the operator can select the sheet type via the inputting section, and easily retrieves processing position information stored in the recording section related to the sheet type, whereby the operator can easily input processing position information. Further, when different images are to be formed on a sheet of the same processing position, the operator needs not to input the processing position, which allows the image forming apparatus to be more operable.

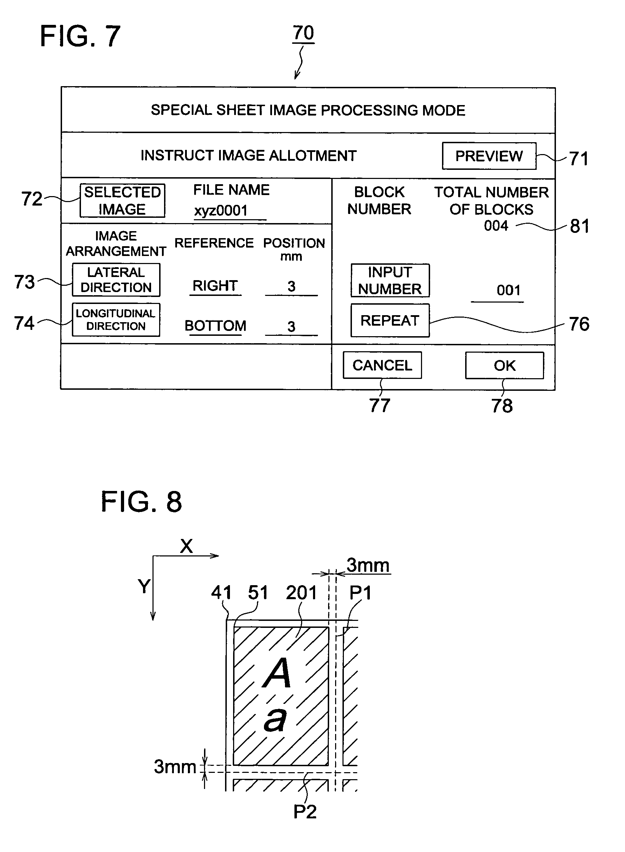

Returning to Fig. 4, the operational flow will be detailed. In step S303, the images are laid out into each block as follows. Firstly, plural image data are read out from image memory 103, being the recording section. The image data is sequentially laid out by the inputting section into the number of blocks which was set in step S301. While the image data are laid out, the image data is allotted to a specific block, and the reference position is set in the block for image formation (which will be detailed in Fig. 8). "Allot" means "each image is laid out on a specific block", while "lay out" means "the allotted image data is to be arranged at a specific position of a specific block of the sheet".

When an image size is greater than its laid out block size, the image size can be reduced, or a portion of the image data is trimmed, which options are selectable. Therefore, the allotted image can be fitted onto the block.

In this case, allotted image data of each block on a single sheet is combined so that combined image data (hereinafter, referred to as "a page image data") is formed in a single sheet.

Next, the operator sets the number of sheets to be outputted (step S304), and presses a start button on the operation panel. Then image formation starts in accordance with the inputted setting conditions, and sheets are conveyed from sheet storing section 8a (step 5305).

Next, image forming position correcting functions will be detailed (in steps S306 - S310). Position detector 20 detects a processing position from the edge of sheet S (step S306), which is compared with processing position information of the perforations of sheet S (step S307). If the detected processing position is within a predetermined range of error, ("Yes" in step S308), the image forming position correction is conducted as below (S309).

In addition, in step S307, when the difference between the processing information and the detected value by the detector 20 is out of the predetermined range of error ("No" in step S308), abnormality countermeasures are conducted (step S330), which will be detailed later.

In image forming position correcting step S309, the position of the image data in each block is adjusted based on changes of the processing position, and the image data of each block on a single sheet is combined to become a new page image data. Based on the new page image data, image formation is conducted on the sheet based on a leading edge reference (step S310), and the sheet carrying the formed image is ejected onto tray 1 (18a in Fig. 1) (being step S311).

The above described operations in steps S305 - S311 are repeated (when step S312 is "No"), until the number of set sheets is completed. When the number of sheets set is counted up ("Yes" in step S312), image formation is completed.

Instead of the above leading edge reference, operational timing of paired registration rollers 13 will be used for the reference, or an output from position detector 20 will be used for the reference.

In the above described explanation, the processing position is detected for each sheet. However, for one job, in which image formation is repeated under predetermined conditions until the number of sheets set is completed, the image forming position correction can be conducted for only the top sheet, and the correction conducted for the top sheet is repeated on the sheets from second sheet, that is, page image data after the re-combining operation can be repeatedly outputted on the following sheets to form the images.

When the number of sheets set reaches the number inputted in step S304, image formation is completed ("Yes" in step S312). As another example which is not the case of the one job operation, image forming position can be corrected for each stack of sheets, that is, every each sheet feeding tray.

Further, it is possible for the present invention to mount position detector 20 between paired registration rollers 13 and paired conveyance rollers 14. However, since detecting timing of position detector 20 is more delayed than exposure timing of imagewise exposure unit 3, the image forming position is not corrected on real time. To overcome this problem, with respect to one job or the top sheet of stacked sheets, only the processing position is detected by position detector 20, while no image formation is conducted, and the image forming positions from the second sheet are corrected by processing position information of the top sheet.

Still further, the above operation can be conducted in the double-sided image forming mode. In the double-sided image forming mode, after the above operation is conducted on the front surface (the first surface), operations from step S305 to step S310 are conducted on the rear surface (the second surface).

That is, in the double-sided image forming mode, the image forming position is corrected by the image forming position correcting section, whereby image formation can be conducted with high accuracy even on the rear surface by adjusting the image to the processing position.

Still further, since the perforations penetrate the sheet, the processed positions on the front surface and the rear surface are equal. Accordingly, the detected value of the processed position of the front surface can also be used as processing position information of the rear surface, by flipping the surface and changing back to front, that is, the processing position detection by position detector 20 of the front rear surface can be neglected.

As described above, the image forming position can be corrected based on the detected value of position detector 20 of the front surface, whereby the image forming position on both surfaces can be effectively corrected.

Figs. 6(a) and 6(b) show an example of image layout conducted on the sheet in Fig. 5. Numerals 401 - 404 of Fig. 6(a) represent blocks on the sheet which are surrounded by perforations P1 and P2, and the edges of sheet 40. Images 201 - 204 stored in image memory 103 are laid out onto the blocks as shown in Fig. 6(b).

When images 201 - 204 are allotted, plural sections on sheet 40 can be used as the correction reference positions. For example, perforations P1 and P2 serve the correction reference positions of images 201 and 203, while perforation P2 and a right edge (which is shown by a straight line on intersecting points 43, 46 and 49) of sheet 40 serve as the correction reference positions of images 202 and 204. Accordingly, since plural members are used as the correction reference positions, highly accurate image formation can be conducted, while the images are adjusted within the processing positions.

Fig. 7 shows an example of a display screen of an inputting section relating to the embodiment of the present invention. The inputting section in Fig. 7 corresponds to inputting section 107 in Fig. 2. To input an operational direction, the operator uses a mouse or presses buttons on a key-board, or touches specific positions on a touch panel, superposed on an LCD of the inputting section.

Display screen 70 is displayed by the LCD, character display sections 71 - 78 correspond to the touch panels, which, when the operator touches one of them, another display screen (which is not illustrated) appears, and changes to a screen to enable input of a file name or reference position. Further, when the operator touches "preview" button 71 on the touch panel, the preview screen is displayed in which the image data arranged for each block is displayed as a thumbnail data.

When the operator inputs the file name, selected image 72, representing the image data, is retrieved from image memory 103. Block numbers represent the number which is automatically assigned to each block on the sheet from the upper left. Image arrangement represents designated references to arrange the image data within each block, and to designate the relative position against the references.

In the example shown in Fig. 7, image data 201 (file name xyz0001) in Figs. 6(a) and 6(b) is instructed to be arranged within block 401 (block number 001) in Fig. 6(a), under the reference of right perforation P1 and bottom perforation P2 in block 401, and with the interval of 3 mm from the reference.

By touching "repeat" button 76 on the touch panel to change the screen display (which is not illustrated), the operator can input all data about a full sheet to be repeatedly arranged of the same selected image.

Fig. 8 shows an example of the correction reference position and the image position correction. Fig. 8 shows an enlarged portion of Fig. 6(b). The image data is arranged with interval of 3 mm from each reference, based on the instruction which was set in Fig. 7, under the correction reference position in direction X is perforation P1, while that of direction Y is perforation P2. In this case, image 201 is created from write-start point 51 (coordinate x1, y1).

If the detected positions of perforations P1 and P2, which were detected by position detector 20, are the same as the processing position information, the correction becomes zero, and write-start point 51 of image 201 has still coordinate (x1, y1).

If the detected positions of perforation P1 and P2 are shifted from processing position information for "a" in direction X, and "b" in direction Y, corrected write-start point 51 is shown by coordinate (x1 + a, y1 + b). Due to this, the position of image 201 is kept in the desired positional relationship with the perforations.

As described above, based on the sheet processing position and allotted image information, both of which are set by the inputting section, and also on the detected results of the edge of sheet or the processing position, which is detected by the position detector, the image forming position correcting function of the controller controls a timing and a position for starting image formation, and it forms an image on the sheet based on the allotted image data stored in the recording section.

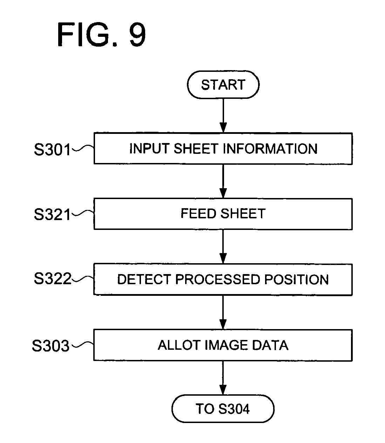

Fig. 9 is a flow chart which shows the operations of the processing position information detecting mode relating to the embodiment of the present invention. The flow chart shown in Fig. 9 corresponds to steps S301 - S303 in the flow chart of Fig. 4. In order to not need to repeat explanation, the steps of Fig. 9 which are common to those in Fig. 4 are designated by the same number.

When the operator touches a mode switching button (which is not illustrated) on inputting section 107, the processing position information detecting mode is switched from the normal condition. In the processing position information detecting mode, after sheet information, such as the sheet size, is inputted (step S301), the sheet is supplied (step S321), and the processing position is detected (step S322). Using the detected value, processing position information of the sheet is recorded in nonvolatile memory 105 which serves as the recording section. Since the positions and the sizes of the blocks are understood based on said recorded processing position information, the image data are allotted onto each block via inputting section 107 (step S303).

Accordingly, it is possible to structure a system in such a way that, instead of inputting processing position information by the operator, after the sheet is supplied, processing position information is obtained by the value detected by position detector 20. By this structure, processing position information is inputted easily.

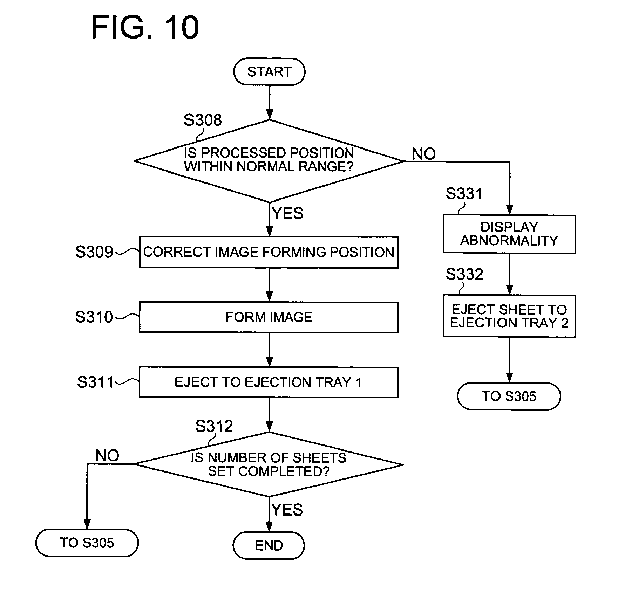

Fig. 10 is a flow chart which shows the operation when abnormal situations occur on the embodiment of the present invention. "Abnormal situation" means that the difference between processing position information of the sheet and detected processed position value by position detector 20, is greater than a predetermined value, which corresponds to the operation of step S330 in the flowchart of Fig. 4. When the difference between processing position information of the sheet and detected processing position value by position detector 20 is greater than a predetermined value ("No" in step 308), the controller determines that an abnormal situation exists, and an abnormal sign is displayed on the LCD of the inputting section (step S331). The predetermined value for determining abnormality may, for example, be 2 mm, or can be set by the operator to be any reasonable value.

As the procedure of the above case, when the processing position is beyond the normal range, no image formation is conducted on the sheet, and a sheet carrying no image is ejected onto ejection tray 2 (which is 18b in Fig. 1), different from ejection tray 1 (which is 18a in Fig. 1) used for normal situation (step S332).

After this, the procedure returns to step S305, and new sheets are supplied for subsequent image formation.

In addition, as one embodiment, the procedure is explained in which the display of abnormality (step S331) and ejection onto ejection tray 2 (step S332) are conducted, but as another embodiment, the procedure can be conducted in which either one of them is carried out. Further, when an abnormality is judged to exist, the current operation can be stopped, without returning to step S305.

As explained above, when the processing position varies on the sheet, the controller compares processing position information with the value detected by the position detector. When the difference between them is greater than the predetermined value, the display shows the abnormality, as well as the sheet carrying the varied processing position is ejected onto the tray, differing for the tray for the normal operation, that is, sheets carrying the abnormal processing position can be separated from sheets carrying the acceptable processing position. Further when an abnormality is detected, no image formation is conducted on the sheet, which reduces waste.

In Figs. 3(a) and 3(b), as an example of processing position detector 20, a transparent detector is explained in which light source 20a and light detector 20b sandwich the conveyed sheet. However, not limiting to the above example, a reflection detector can be employed in which light source 20a and light detector 20b are mounted on one side of the sheet. Further, a CCD sensor can be employed to read the surface condition of the sheet, whereby the CCD sensor automatically catches patterns such as perforations.

Still further, a perforated sheet is used for the pre-processed sheet in the above explanation. However, not limiting to the perforated sheet, a folded sheet or a folded sheet carrying perforations can also be employed, while the CCD sensor detects the surface condition of the sheet.

Still further, not to limit the above-described image forming apparatus using the electro-photographic method, the present invention can be applied onto any image forming apparatus which forms images and conveys the sheet by the paired rollers, such as a thermal-transfer printer, and an inkjet printer.

As described above, based on the present invention, the image forming apparatus can conduct image formation while accurately adjusting the image to each of several processing position, on a pre-processed sheet on which perforations or folds have been created, and in particular, on a single sheet divided into plural processing positions.

## Claims

1. An image forming apparatus comprising:
(a) a recording section which records therein image data, and processing position information of a sheet;
(b) an image forming section which forms an image on the sheet on the basis of the image data recorded in the recording section;
(c) a position detector which detects a pre-processed position on a sheet to be fed; and
(d) a controller which compares the processing position information with a value detected by the position detector, judges whether or not an abnormality is present, and corrects an image forming position of the image forming section for each block of a plurality of blocks surrounded by either processed portions of a sheet or a processed portion and an edge of the sheet.

2. The image forming apparatus of claim 1, wherein the controller allots and lays out the image data of the recording section to the plurality of blocks on the basis of the processing position information.

3. The image forming apparatus of claim 2, having a processing position information detecting mode which records the processing position information of a sheet in the recording section on the basis of the detected value of the position detector.

4. The image forming apparatus of claim 2, wherein the controller corrects the image forming position as a reference of the pre-processed position of the sheet to be fed that is detected by the position detector.

5. The image forming apparatus of claim 2, further comprising an inputting section which enables an operator to conduct various kinds of inputs, wherein at least one of an input for processing position information of a sheet and an allotment of the image data to the blocks is performed through the inputting section.

6. The image forming apparatus of claim 5, wherein the controller enables the operator to select a sheet type, and to retrieve processing position information which is recorded in the recording section in connection with the sheet type.

7. The image forming apparatus of claim 2, having a two-sided image forming mode in which image formation can be performed on both sides of a sheet, wherein the controller corrects the image forming position in the two-sided image forming mode.

8. The image forming apparatus of claim 7, wherein the controller corrects an image forming position for a rear side of the sheet in the mode on the basis of a detected value of the position detector for a front side of the sheet.

9. The image forming apparatus of claim 1,
wherein when the controller judges that an abnormality is absent, the controller corrects the image forming position of the image forming section by recognizing a plurality of positions of an edge and a pre-processed position of the sheet to be fed as a correction reference position.

10. The image forming apparatus of claim 9, having a two-sided image forming mode in which image formation can be performed on both sides of a sheet, wherein the controller corrects the image forming position in the two-sided image forming mode.

11. The image forming apparatus of claim 9, further comprising:
a plurality of ejection trays to which a sheet on which an image has been formed, is ejected,
wherein when the controller judges that the abnormality is present, the controller carries out at least one of a notification that the abnormality is detected, and an ejection of a sheet that is ejected to an ejection tray different from that to which a sheet is ejected when judged that the abnormality is absent.

12. The image forming apparatus of claim 11, wherein when the controller judges that the abnormality is present, the image forming section does not form an image on a sheet.

13. The image forming apparatus of claim 9, wherein the controller allots the image data in the recording section to each block of a plurality of blocks surrounded by either processed portions of a sheet or a processed portion and an edge of the sheet according to the processing position information.

14. The image forming apparatus of claim 1, wherein the processed portion is a perforated portion.

15. The image forming apparatus of claim 14, wherein the position detector which detects a position of the perforated portion, comprises a light emitting section including a plurality of light emitting diodes, and a light receiving section in which a plurality of photodiodes are arranged on a line.
